# EUROPEAN PATENT APPLICATION

(11) **EP 2 186 626 A2**
(43) Date of publication of application: **19.05.2010**
(21) Application number: 09175325.1
(22) Date of filing: 06.11.2009
(51) Int. Cl.: B29C 70/32, B29C 41/04, B29L 31/08

(54) **Method of making wind turbine blade**

(30) Priority: 17.11.2008 US 272232
(71) Applicant: General Electric Company, Schenectady, NY 12345 (US)
(72) Inventor: Suffield, Rachel M., Simpsonville, SC 29681 (US)
(74) Representative: Bedford, Grant Richard

(57) **Abstract**

A method of making a wind turbine blade is provided. The method includes the steps of providing a mold (410) generally conforming to a shape of at least a portion of a wind turbine blade. A filling step (420) fills the mold with a thermoplastic material. A heating step (430) heats the mold, and at least a portion of the heating step includes a rotating step that rotates the mold. A cooling step (440) cools the mold, and can be followed by a removing step (450), which removes at least a portion of the wind turbine blade from the mold.

## Description

The subject matter described here generally relates to wind turbine blades, and, more particularly, to wind turbine blades manufactured by a rotational molding process.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

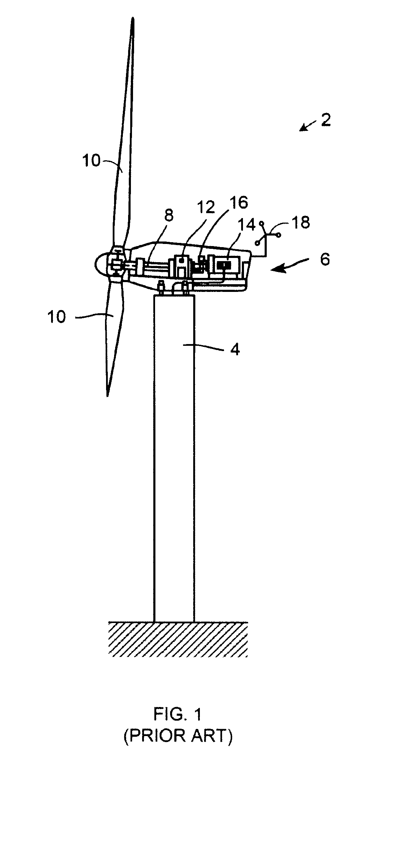

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a hub to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that receives input from an anemometer 18.

The blades 10 generate lift and capture momentum from moving air that is them imparted to a rotor as the blades spin in the "rotor plane." Each blade is typically secured at its "root" end, and then "spans" radially "outboard" to a free, "tip" end. The distance from the tip to the root, at the opposite end of the blade, is called the "span." The front, or "leading edge," of the blade connects the forward-most points of the blade that first contact the air. The rear, or "trailing edge," of the blade is where airflow that has been separated by the leading edge rejoins after passing over the suction and pressure surfaces of the blade.

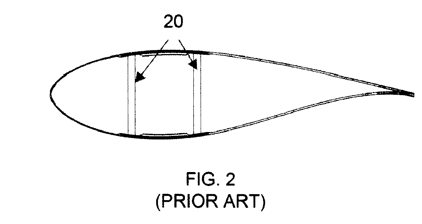

As illustrated in FIG. 2, the blades 10 for such wind turbines 2 are typically fabricated by securing various "shell" and/or "rib" portions to one or more "spar" members extending spanwise along the inside of the blade for carrying most of the weight and aerodynamic forces on the blade. The spars are typically configured as I-shaped beams having a web, referred to as a "shear web" 20, extending between two flanges, referred to as "caps" or "spar caps," that are secured to the inside of the suction and pressure surfaces of the blade. However, other shear web configurations may also be used including, but not limited to "C-," "L-," "T-," "X-," "K-," and/or box-shaped beams, and the shear webs 20 may also be utilized without caps. For example, U.S. Patent No. 4,295,790 discloses a blade structure for use in a windmill with metal shear webs and subassemblies that are filled with approximately two pound cubic foot density rigid urethane foam.

Other conventional shear webs typically consist of a foam core that is coated by a resin-infused composite material. The core is typically formed from multiple foam sheets that are connected with adhesive and then trimmed to form the desired shape of the shear webs 20. These connected foam sheets inside of the shear web then act as a spacer for the composite material coatings on either side but do not provide much additional structural benefit to the shear web 20.

Various drawbacks associated with such conventional approaches are addressed herein by providing, in various embodiments, a method of producing a wind turbine blade. The method includes the steps of providing a mold generally conforming to a shape of at least a portion of a wind turbine blade. A filling step fills the mold with a thermoplastic material. A heating step heats the mold, and at least a portion of the heating step includes a rotating step that rotates the mold. A cooling step cools the mold, and is followed by a removing step, which removes at least a portion of the wind turbine blade from the mold.

Various aspects of this technology will now be described with reference to the following figures ("FIGs."), which are not necessarily drawn to scale, but use the same reference numerals to designate corresponding parts throughout each of the several views.
FIG. 1 is a schematic side view of a conventional wind generator;
FIG. 2 is a schematic cross-sectional view of the blade shown in FIG. 1;
FIG. 3 is a schematic cross-sectional view of a wind turbine blade that can be manufactured using the method of the present invention;
FIG. 4 is a flowchart of the method used to manufacture a wind turbine blade, according to one aspect of the present invention.

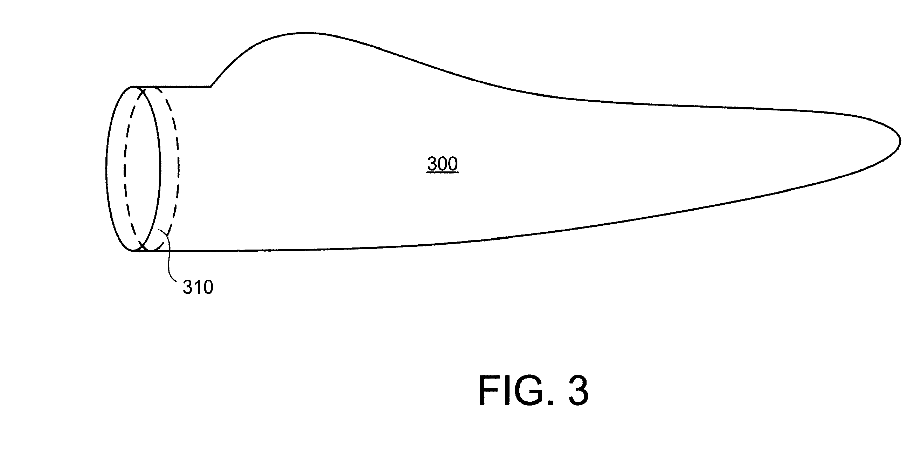

Fig. 3 illustrates a schematic cross-sectional view of a wind turbine blade 300. A rotational molding method can be used to fabricate a blade 300, according to aspects of the present invention. The rotational molding process can make the skin or shell of a wind turbine blade in one piece or in multiple pieces than can be bonded together. The root section of the blade can be made longer in the span wise direction than the design specifies, and this extra length can be removed. The removal of this "extra" portion 310 can enable interior access to the blade shell. Span wise and/or cord wise reinforcements can be inserted and bonded inside the hollow shell structure.

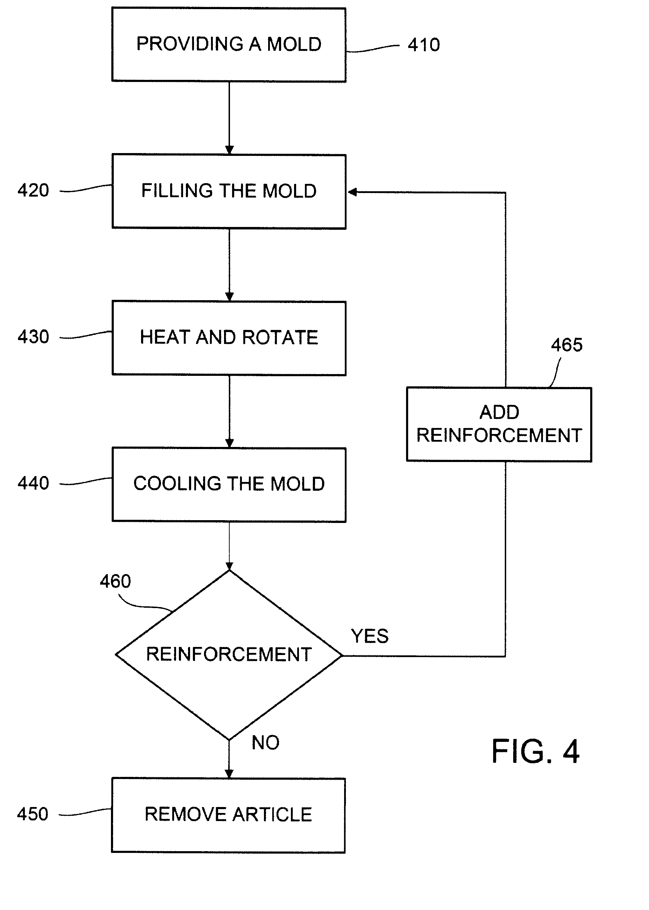

According to one aspect of the present invention, and illustrated in Fig. 4, the method can include providing a mold 410 generally conforming to a shape of at least a portion of a wind turbine blade. An entire blade or only a portion of a blade can be formed by the mold. The next step may include filling the mold 420 with a closed cell structural material or foam. The material may be from the polyethylene family, or cross-linked polyethylene (PE), linear low density polyethylene (LLDPE), high density polyethylene (HDPE), polyethylene, ultra high molecular weight polyethylene (UHMWPE), and polypropylene (PP) or any other suitable thermoplastic material. In addition other compounds could be used such as PVC plastisols, nylons, polypropylene or even some natural materials. Compositions of the above materials could also include fillers as well.

The next step in the process can include heating the mold 430, where the mold can be rotated as it is heated. The mold should be rotated until all the material has melted and adhered to the mold wall. The mold can be rotated through two or more axes, and/or rotated at different speeds, in order to ensure an even distribution of the material.

Following the heating and rotating steps, a cooling step 440 can be performed which cools the mold and the material contained therein. The article (i.e., blade or blade portion) can be removed from the mold 450 subsequent to the cooling step. An optional step may determine if reinforcement is desired 460 and if so, reinforcement sections can be added to the mold 465. One embodiment of adding reinforcement sections is described herein after.

According to another embodiment of the present invention the method of making a wind turbine blade using a rotational molding process can include the following steps. The first step can include placing open halves of a mold in an oven and apply a predetermined quantity of material. In one embodiment, a powder coating gun can be used to apply a thermoplastic material layer to the mold surfaces. For example, the material can be about one third of the final skin thickness.

Both halves of the mold can then be heated up and subsequently cooled to create the initial layer of skin material. One or more reinforcement sections may then be inserted into the cooled mold halves. The reinforcement sections will form a strong bond to the blade as the material will partially or completely coat the surfaces of the reinforcement sections, thereby creating a strong mechanical bond. A lower molecular weight thermoplastic polymer resin than used for the outer skin material can be added, and the mold halves can then be closed. The rotational molding process can then begin which includes heating and rotating the mold.

The method of various aspects of the present invention can be used to make a one piece wind turbine blade, or it can be used to make multiple portions of a blade, which are subsequently joined to form a complete blade. It may be advantageous to ship blade sections individually, and then join them together on-site for ease of shipping and transportation.

Thick bond lines along the leading and trailing edges of some known wind turbine blades impede aero-elastic performance. However, by using the method of aspects of the present invention the bond line along the leading and trailing edge of the blade is eliminated and the aero-elastic performance is improved.

The method of making a wind turbine blade, according to aspects of the present invention provides a number of advantages, including improved areoelastic blade performance due to the elimination of trailing edge and leading edge bond joints. Another advantage is the potential to reduce cycle time per blade as internal shear and stiffness reinforcements can be bonded with the blade being removed from the tooling. Conversely, in some known processes the shear webs and spar caps are bonded into shell halves while still in the tool. The rotational molding process can also accommodate thermoplastic polymer resins that can be recycled. The method of various aspects of the present invention yields more efficient and higher energy output wind turbines, the potential to increase blade output from factories, and the meeting of recyclability requirements for some locations.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

## Claims

1. A method of making a wind turbine blade (300), comprising the steps of:
providing a mold (410) generally conforming to a shape of at least a portion of a wind turbine blade;
filling the mold (420) with a thermoplastic material;
heating the mold (430), wherein at least a portion of said heating also comprises rotating that rotates said mold; and
cooling the mold (440).

2. The method recited in claim 1, further comprising removing said at least a portion of a wind turbine blade (300) from the mold.

3. The method recited in any preceding claim, further comprising adding a reinforcing material to the mold (465).

4. The method recited in any preceding claim, wherein filling the mold further comprises:
partially filling the mold with a predetermined amount of material, heating the mold and subsequently adding reinforcing elements to said mold, and subsequently adding additional thermoplastic material to said mold.

5. The method recited in any preceding claim, wherein said thermoplastic material is chosen from one or more of the following group:
polyethylene, cross-linked polyethylene (PE), linear low density polyethylene (LLDPE), high density polyethylene (HDPE), ultra high molecular weight polyethylene (UHMWPE), and polypropylene (PP).

6. The method recited in any preceding claim, wherein said thermoplastic material includes fillers.
